Europäisches Patentamt

European Patent Office

Office européen des brevets

(11) Publication number: **0 098 908**
**B1**

# EUROPEAN PATENT SPECIFICATION

(45) Date of publication of patent specification: **02.04.86**

(21) Application number: **82850159.3**

(22) Date of filing: **16.07.82**

(51) Int. Cl.⁴: **C 08 F 220/58,** C 08 F 220/28,
C 09 D 3/00

(54) Method of producing a water-soluble, acid-curing resin for lacquers.

(43) Date of publication of application:
**25.01.84 Bulletin 84/04**

(45) Publication of the grant of the patent:
**02.04.86 Bulletin 86/14**

(84) Designated Contracting States:
**AT BE DE FR GB**

(56) References cited:
**GB-A-1 130 860**

(73) Proprietor: **BONAKEMI AB.**
**Murmansgatan 128**
**S-212 25 Malmö (SE)**

(72) Inventor: **Persson, Curt Reinhold**
**Svedhögsgatan 8J**
**S-212 31 Malmö (SE)**

(74) Representative: **Wiklund, Erik et al**
**AWAPATENT AB Box 5117**
**S-200 71 Malmö (SE)**

Courier Press, Leamington Spa, England.

## Description

This invention relates to the production of a water-soluble acid-curing resin for lacqueurs.

It has already been suggested to use acid-curing lacquers for lacquering of especially good surfaces. These lacquers are based on alkylated carbamide and melamine formaldehyde resins which are usually admixed with alkyd or polyester type plasticizers.

For curing the resin a strong acid, such as hydrochloric acid, sulphuric acid, phosphoric acid or paratoluene sulphonic acid, is added to these lacquers.

The conventional acid-curing lacquers suffer from the disadvantage that the resins contained therein are insoluble in water, and the lacquers must therefore contain as solvent an organic solvent, which is unsuitable for reasons of health and environment. It is therefore desirable to provide acid-curing lacquers devoid of organic solvents and being based on water instead.

The conventional acid-curing lacquers based on carbamide and melamine formaldehyde resin also suffer from the disadvantage of giving off formaldehyde upon curing, which is not either suitable for reasons of health and environment. One has earlier tried to eliminate this disadvantage by using as curing agents substances which neutralize the released formaldehyde. It is however realized that it would be preferable if the lacquer upon curing did not split off any formaldehyde or but a small amount thereof. Among other things, this would bring about a greater freedom in the choice of curing agents.

The present invention has for its object to eliminate the above-mentioned disadvantages from which the conventional acid-curing lacquers suffer and to provide a water-soluble acid-curing resin for lacquers, which upon curing splits off but a small amount of formaldehyde.

This is attained according to the present invention in that an unsaturated methylolamide compound is copolymerized with an unsaturated carboxylic acid monoglycol ester in an alcohol polymerization medium. The polymerization reaction is carried out in the presence of a free radical initiator. After the polymerization the alcohol polymerization medium is removed and replaced by water in which the resulting copolymer resin is soluble.

The definite characteristic features of the invention will appear from the appendant claims.

As mentioned above, an unsaturated N-methylolamide compound is used as a starting material for the production of the water-soluble acid-curing copolymer resin. This compound is a derivative of an unsaturated, aliphatic carboxylic acid having 3—5 carbon atoms. As examples of such carboxylic acids there may be mentioned acrylic acid, crotonic acids such as methacrylic acid and pentene acids, such as allyl acetic acid. Of these carboxylic acids, preference is given according to the present invention especially to acrylic acid and methacrylic acid. The methylolamide compound is obtained in that the carboxylic acid in its amide form, such as acryl amide, is reacted with formaldehyde so as to form the methylolamide, for instance N-methylolacryl amide. The reaction is carried out at an alkaline pH value of not more than 10, in the presence of cupferron.

The methylolamide compound obtained is then copolymerized, as mentioned above, with a monoglycol ester of an unsaturated carboxylic acid. The unsaturated carboxylic acid is selected among the carboxylic acids mentioned in the foregoing in connection with the production of the methylolamide compound. The glycol is selected among glycols having 2 to 7 carbon atoms, that is ethylene glycol, propylene glycol, butylene glycol, pentylene glycol, hexylene glycol and heptylene glycol. Of these glycols, preference is given according to the present invention especially to those having 2—4 carbon atoms and particularly to butylene glycol. The monoglycol esters especially preferred according to the invention are butane diol monoacrylate and butane diol monomethacrylate.

The copolymerization reaction is carried out in the presence of a free radical initiator, such as benzoyl peroxide. It will not be necessary to make any special enumeration of other suitable free radical initiators, since those skilled in the art will realize which these are.

A lower aliphatic alcohol having one 1 to 4 carbon atoms, preferably ethyl alcohol, is used as polymerization medium for the reaction. The alcohol simultaneously is a chain transfer agent and checks that the molecular weight of the resulting copolymer does not become too high.

The copolymerization reaction is exothermic but requires for its initiation a certain heating of the monomers. The best way to initiate the reaction is to add a small batch, such as about 10% by weight of the monomers, to the polymerization medium and to heat to a temperature of about 50° to 100°C, preferably about 75°C. Once the exothermic reaction has started. the remaining amount of monomers is successively supplied under cooling of the reaction vessel, if necessary. The major part of the free radical initiator is added at the beginning of the reaction, while a minor part is added at the end of the reaction when the exothermic reaction decreases. The reaction mixture is then heated and kept at reflux temperature for a certain time, say two hours.

When the copolymerization reaction is concluded the alcohol polymerization medium is driven off and replaced with water in which the resulting copolymer resin is soluble.

The resin solution thus obtained is used as the main constituent of acid-curing lacquers.

For curing such a lacquer in which the copolymer resin according to the invention is a main constituent, there is added a strong acid, such as hydrochloric acid, sulphuric acid, phosphoric acid or paratoluene sulphonic acid, preference being given to hydrochloric acid or paratoluene sulphonic acid. At the curing there is generated but a small amount of formaldehyde, which implies a considerable progress in the art.

In addition to the advantages already mentioned, the copolymer resin produced according to the present invention endows the lacquer in which it is used, with extraordinarily good properties. Lacquers based on the resin according to the invention thus satisfy the requirements (Svensk Möbelfakta=Swedish Furniture Facts) drawn up by the Swedish Furniture Institute and moreover are resistant to most conventional solvents, such as water, aliphatic and aromatic hydrocarbons, ketones and esters. A further advantage is that the cured lacquers possess insignificant thermoplasticity compared with known water-based dispersion lacquers.

For a still better understanding the invention will be described more in detail hereinbelow with the aid of non-limiting Examples which are meant to elucidate preferred embodiments of the invention.

Example 1
Production of N-methylolacryl amide

| | Parts by weight |
|---|---|
| Acryl amide | 75.00 |
| Paraformaldehyde | 27.75 |
| Distilled water | 34.30 |
| Cupferron 1% | 0.45 |
| 2 M NaOH | 0.64 |
| | 138.14 |

The above constituents were poured into a reaction vessel and the reaction was carried out at pH 9.4 to 9.8 and a temperature of 35° to 45°C.

Example 2
Production of water-soluble copolymer resin

| | Parts by weight |
|---|---|
| Butane diol monoacrylate | 1364 |
| N-methylolacryl amide 75% | 514 |
| Ethanol 99.5% | 2500 |
| Benzoyl peroxide | 2 |
| | 4380 |

The ethanol, the benzoyl peroxide catalyst and 10% of the monomer amount were poured into a polymerization vessel equipped with an agitator and a reflux cooler. The mixture was heated to 75°C and the exothermic polymerization reaction started. The remaining monomer amount was continuously added for 2.5 to 3 hours. When all monomer had been added the temperature was maintained at reflux temperature for a further half hour, whereupon 890 parts of the ethanol were expelled. Then a total of 2700 parts by weight of water was added simultaneously as the remaining amount of ethanol (1610 parts by weight) was expelled.

The resulting aqueous solution contained the water-soluble copolymer resin according to the invention, which is useful as a lacquer raw product in the form of a 35 to 40% aqueous solution.

Example 3

| | Parts by weight |
|---|---|
| N-methylolacryl amide 75% | 45.0 |
| Butane diol monoacrylate | 120.0 |
| Ethanol | 220.0 |
| Benzyol peroxide | 0.5 |
| | 385.5 |

The butane diol monoacrylate monomer was mixed N-methylolacryl amide and transferred to a dropping funnel. The ethanol was poured into a reaction flask together with 0.4 parts by weight of benzoyl peroxide. The mixture in the reaction flask was heated to 78°C whereupon the monomer mixture was continuously poured into the reaction flask for about 2 hours. When all monomer had been added and the exothermic reaction decreased, the remaining 0.1 parts of weight of benzoyl peroxide was added. The temperature in the reaction flask was maintained at reflux (75°C) for a further 2 hours. The ethanol was then expelled and replaced with water, in which the copolymer resin formed was dissolved.

Example 4

| | Parts by weight |
|---|---|
| N-methylol methacryl-amide 75% | 51.0 |
| Butane diol monoacrylate | 120.0 |
| Ethanol | 220.0 |
| Benzoylperoxide | 0.5 |
| | 391.5 |

The experiment was performed in the same way as in Example 3, and an aqueous solution of the N-methylol methacryl amide/butane diol monoacrylate copolymer resin was obtained.

## Claims

1. A method of producing a water-soluble acid-curing resin for lacquers, characterized by copolymerizing an unsaturated N-methylol amide compound which is a derivative of an unsaturated aliphatic carboxylic acid having 3 to 5 carbon atoms with a monoglycol ester of an unsaturated aliphatic carboxylic acid having to 3 to 5 carbon atoms, the glycol part containing 2 to 7 carbon atoms, in the presence of a free radical initiator, the polymerization being performed in a polymerization medium consisting of a lower aliphatic alcohol having 1 to 4 carbon atoms, and replacing the polymerization medium after the polymerization with water for dissolution of the copolymer formed.

2. A method as claimed in claim 1, characterised by utilizing N-methylol acryl amide or N-methylol methacryl amide as unsaturated N-methylolamide compound.

3. A method as claimed in claim 1 or 2, characterised by utilizing as monoglycol ester an ester of acrylic acid or methacrylic acid with any one of ethylene glycol, propylene glycol or butylene glycol.

4. A method as claimed in any one of claims 1—3, characterised by performing the polymerization in the presence of benzoyl peroxide as free radical initiator.

5. A method as claimed in any one of claims 1—4, characterised by performing the polymerization in ethyl alcohol as polymerization medium.

## Patentansprüche

1. Verfahren zur Herstellung eines wasserlöslichen, säurehärtenden Harzes für Lacke, dadurch gekennzeichnet, dass eine ungesättigte N-Methylolamidverbindung, welche ein Derivat einer ungesättigten, aliphatischen Carbonsäure mit 3—5 Kohlenstoffatomen ist, mit einem Monoglycolester einer ungesättigten, aliphatischen Carbonsäure mit 3—5 Kohlenstoffatomen, wobei der Glycolteil 2—7 Kohlenstoffatome enthält, in Gegenwart eines Freiradikal-Initiators copolymerisiert wird, wobei die Polymerisation in einem aus einem niederaliphatischen Alkohol mit 1—4 Kohlenstoffatomen bestehenden Polymerisationsmittel ausgeführt wird, und dass das Polymerisationsmittel nach der Polymerisation durch Wasser ersetzt wird, um das gebildete Copolymer aufzulösen.

2. Verfahren nach Anspruch 1, dadurch gekennzeichnet, dass als ungesättigte N-Methylolamidverbindung N-Methylolacrylamid oder N-Methylolmethacrylamid benutzt wird.

3. Verfahren nach Anspruch 1 oder 2, dadurch gekennzeichnet, dass als Monoglycolester ein Ester aus Acrylsäure oder Methacrylsäure mit einem von Äthylenglycol, Propylenglycol oder Butylenglycol ausgenutzt wird.

4. Verfahren nach einem der Ansprüche 1—3, dadurch gekennzeichnet, dass die Polymerisation in Gegenwart von Benzoylperoxyd als Freiradikal-Initiator ausgeführt wird.

5. Verfahren nach einem der Ansprüche 1—4, dadurch gekennzeichnet, dass die Polymerisation in Äthylalkohol als Polymerisationsmittel ausgeführt wird.

## Revendications

1. Procédé de production d'une résine pour vernis, soluble dans l'eau, durcissable par un acide, caractérisé en ce que l'on copolymérise un composé N-méthylolamide insaturé, qui est un dérivé d'un acide carboxylique aliphatique insaturé en $C_3$—$C_5$, avec un ester de monoglycol d'un acide carboxylique aliphatique insaturé en $C_3$—$C_5$, la portion glycol contenant de 2 à 7 atomes de carbone, en présence d'un inducteur à radicaux libres, la polymérisation étant effectuée dans un milieu de polymérisation consistant en un alcool aliphatique inférieur en $C_1$—$C_4$, et on remplace après la polymérisation le milieu de polymérisation par de l'eau pour la dissolution du copolymère formé.

2. Procédé selon la revendication 1, caractérisé en ce qu'on utilise comme composé N-méthylolamide insaturé le N-méthylolacrylamide ou le N-méthylolméthacrylamide.

3. Procédé selon la revendication 1 ou 2, caractérisé en ce qu'on utilise comme ester de monoglycol un ester d'acide acrylique ou méthacrylique avec l'un quelconque parmi l'éthylèneglycol, le propylèneglycol ou le butylèneglycol.

4. Procédé selon l'une quelconque des revendications 1 à 3, caractérisé en ce que l'on effectue la polymérisation en présence de peroxyde de benzoyle comme inducteur à radicaux libres.

5. Procédé selon l'une quelconque des revendications 1 à 4, caractérisé en ce que l'on effectue la polymérisation dans l'alcool éthylique comme milieu de polymérisation.